Europäisches Patentamt

European Patent Office

Office européen des brevets

(19)

(11) Numéro de publication: **0 015 199**
**B1**

(12) **FASCICULE DE BREVET EUROPEEN**

(45) Date de publication du fascicule du brevet: **22.12.82**

(51) Int. Cl.³: **G 01 S 3/78, F 41 G 3/22**

(21) Numéro de dépôt: **80400220.2**

(22) Date de dépôt: **15.02.80**

(54) **Dispositif optoélectrique de localisation de source rayonnante et système de repérage de direction comportant de tels dispositifs.**

(30) Priorité: **27.02.79 FR 7905004**

(43) Date de publication de la demande:
**03.09.80 Bulletin 80/18**

(45) Mention de la délivrance du brevet:
**22.12.82 Bulletin 82/51**

(84) Etats contractants désignés:
**DE GB IT NL SE**

(56) Documents cités:
**FR - A - 2 322 356**
**FR - A - 2 339 176**
**FR - A - 2 399 033**
**GB - A - 1 520 154**
**US - A - 3 205 361**
**US - A - 3 790 276**

(73) Titulaire: **THOMSON-CSF**
**173, Boulevard Haussmann**
**F-75379 Paris Cedex 08 (FR)**

(72) Inventeur: **Trocellier, Roger**
**"THOMSON-CSF"-SCPI 173, bld Haussmann**
**F-75360 Paris Cedex 08 (FR)**
Inventeur: **Reymond, Jean-Claude**
**"THOMSON-CSF"-SCPI 173, bld Haussmann**
**F-75360 Paris Cedex 08 (FR)**

(74) Mandataire: **Trocellier, Roger et al,**
**THOMSON-CSF SCPI 173, Bld Haussmann**
**F-75379 Paris Cedex 08 (FR)**

Courier Press, Leamington Spa, England.

Dispositif optoélectrique de localisation de source rayonnante et système de
repérage de direction comportant de tels dispositifs

La présente invention concerne un dispositif optoélectrique de localisation de source rayonnante permettant de déterminer la direction d'une source ponctuelle par rapport au dispositif, c'est-à-dire de localiser angulairement la source. L'invention s'applique notamment à la réalisation de systèmes de repérage de direction tels que, par exemple, des systèmes viseurs de casque.

Selon des techniques connues, FR—A—2 339 176, il est réalisé un dispositif de localisation angulaire d'une source lumineuse ponctuelle comportant un cache optique à l'avant d'un boîtier dans le fond duquel sont disposés des réseaux linéaires d'éléments photo-sensibles dans un plan parallèle à celui du cache. Celui-ci est pourvu de zones transparentes sous forme de fentes linéaires pour délimiter le rayonnement provenant de la source selon au moins deux plans secants dont la droite d'intersection passe par la source emettrice. Chaque fente est associée avec une barrette détectrice de direction inclinée par rapport à celle de la fente, de préférence perpendiculairement à la fente. Ainsi les points d'intersection des plans avec les barrettes détectrices permetent de déterminer par le calcul la position de la droite d'intersection des plans c'est-à-dire la localisation angulaire ou direction de la source par rapport au dispositif. Des circuits de traitement des signaux détectés par les barrettes permettent d'identifier le rang des éléments sensibilisés correspondants aux points d'intersection et des circuits de calcul annexes élaborent les données de dépointage de la source. Utilisé avec plusieurs sources ponctuelles liées à une structure mobile, par exemple le casque d'un pilote, les sources étant alimentées séparément et séquentiellement, le dispositif permet de calculer quasi-instantanément la position spatiale des sources et consécutivement la direction d'un axe lié à la structure mobile, la direction de visée dans l'application à un viseur de casque.

Un objet del'invention est de réaliser un dispositif de localisation angulaire de source lumineuse ponctuelle combinant également un cache optique avec des barrettes détectrices et dans lequel ces éléments sont agencés en sorte que la direction de la source ne résulte pas de l'intersection de plans mais correspond à l'axe d'un cône ayant pour sommet la source. Le procédé différent mis en oeuvre autorise notamment une simplification importante du calcul, une fiabilité qui peut être accrue par des vérifications complémentaires de calcul et la préservation de la précision de la mesure.

Un autre objet de l'invention est de réaliser un dispositif de localisation spatiale d'une source rayonnante en utilisant plusieurs dispositifs de localisation angulaire, la source constituant le point commun des directions de dépointage calculées.

Un autre objet de l'invention est de réaliser un système de repérage de direction comportant un ou plusieurs dispositifs de localisation angulaire pour déterminer une direction définie au moyen de plusieurs sources rayonnantes.

Suivant l'invention, il est réalisé un dispositif de localisation d'une source rayonnante ponctuelle comportant, un boîtier avec une face avant formant un cache optique pour ne laisser pénétrer le rayonnement de la source que selon des zones transparentes de forme déterminée et, dans un plan parallèle au cache et interne au boîtier, un montage de réseaux linéaires d'éléments photosensibles, des circuits de traitement des signaux détectés par les réseaux identifiant le range des éléments sensibilisés par le rayonnement transmis à travers le cache, et des moyens de calcul de localisation de la source à partir des identifications de rang, et dans lequel les zones transparentes délimitent une forme circulaire en sorte que le rayonnement transmis est interne à une cône ayant pour sommet la source et s'appuyant sur cette forme circulaire, les réseaux détecteurs étant déterminés en sorte d'interceptor au moins trois points du cercle projeté dans le plan parallèle au cache et correspondant à la forme circulaire, les moyens de calcul déterminant à partir des coordonnées de ces trois points les coordonnees du centre correspondant et la localisation angulaire de la source.

Les particularités et avantages de la présente invention apparaîtront dans la description qui suit donnée à tire d'exemple à l'aide des figures annexées qui représentent:
— la figure 1, un schéma d'un dispositif de localisation conforme à l'invention;
— la figure 2, un schéma relatif au fonctionnement du dispositif selon la figure 1;
— la figure 3, un exemple de réalisation du cache optique;
— la figure 4, un exemple de réalisation du dispositif de localisation selon la figure 1;
— les figures 5 et 6, des exemples de réalisation des réseaux détecteurs;
— la figure 7, un schéma simplifié d'une solution préférée pour réaliser un dispositif de localisation conforme à l'invention;
— la figure 8, un exemple de réalisation du dispositif selon la figure 7, et
— la figure 9, un schéma relatif à l'utilisation d'une pluralité de dispositifs de localisation conforme à l'invention.

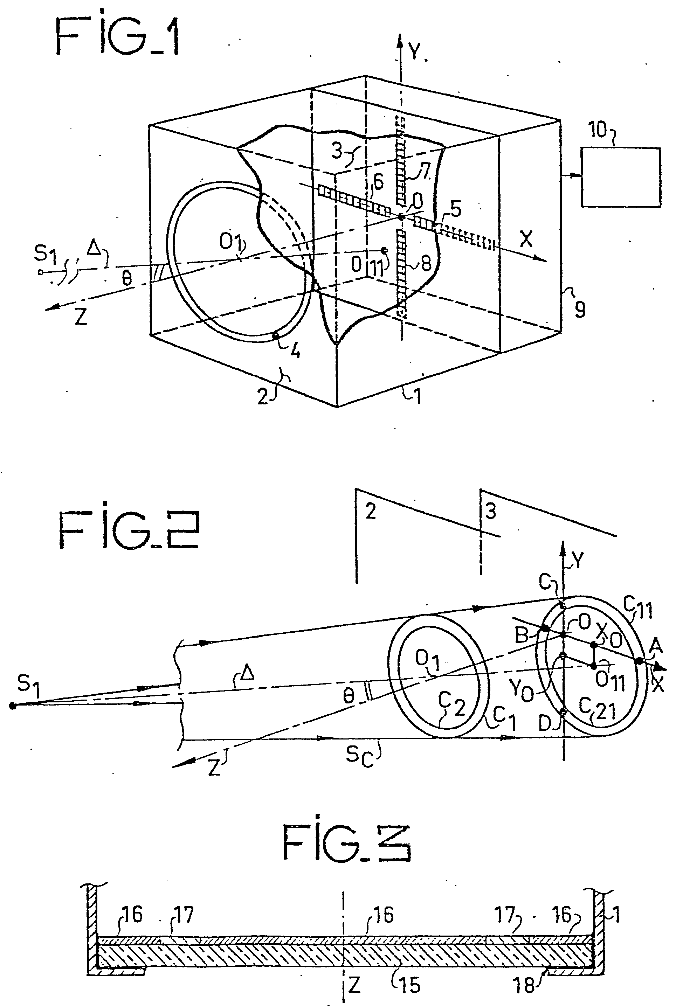

En se reportant à la figure 1 correspondant à un exemple de réalisation préférée, le dispositif de localisation comporte un boîtier 1 pour isoler les barrettes détectrices du rayonnement ambiant. Le boîtier comporte deux faces planes et parallèles 2 et 3 et il peut être de forme parallélépipèdique comme représenté. La face avant 2 est munie de zones transparentes 4 pour former un cache optique en ne laissant pénétrer le rayonnement extérieur qu'à l'endroit de ces zones. Les zones transparentes 4 délimitent une couronne circulaire de centre OI, on verra par la suite que cette forme n'est pas limitative. Le face arrière 3 parallèle à la face avant 2 comporte, côté interne au boîtier, la partie détectrice formée de réseaux linéaires d'éléments photosensibles. Les barrettes détectrices sont au nombre de quatre disposées selon deux directions cartésiennes de référence pour la mesure OX et OY, le centre O correspondant à la projection du centre OI sur la face 3; deux barrettes 5 et 6 sont disposées selon OX à égale distance du centre O et deux autres barrettes 7 et 8 sont disposées selon OY à égale distance du centre O, comme précédemment cette configuration de barrettes n'est pas à considérer comme limitative.

L'axe O OI correspond à la direction cartésienne Z de dépointage nul par rapport à laquelle s'effectue la mesure de la localisation angulaire. Les barrettes détectrices peuvent être réalisées en circuits DTC (Dispositifs à Transfert de Charge) encore appelés circuits CCD (Charge Coupled Device). Les circuits de traitement des signaux détectés assurant l'identification de rang peuvent être réalisés sous de faibles dimensions en circuits solides et incorporés dans le fond du boîtier en 9 à l'arrière de la face 3 support des barrettes. Les circuits de calcul 10 qui procédent du calcul du dépointage à partir des identifications de rang sont situés à distance pouvant faire partie d'un calculateur annexe. La sélection du rayonnement utile, c'est-à-dire celui provenant de la source à localiser, est produit de manière connue en utilisant des sources émettrices dans un spectre de radiation étroit correspondant à celui de détection des barrettes photosensibles. Le domaine spectral d'exploitation peut par exemple avec des détecteurs CCD se situer dans l'infrarouge. Il n'est pas exclu d'utiliser en complément un filtrage optique sur le trajet des rayons transmis.

Le procédé utilisé selon l'invention est mis en évidence à l'aide de la figure 2. Le rayonnement utile provenant de la source ponctuelle S1 située à distance et transmis à travers le cache 2, se trouve à l'intérieur d'une cône SC de sommet S1 et s'appuyant sur le contour externe C1 de la couronne transparente 4. Le cercle C1 est projeté sur le plan de détection 3 selon un cercle homothétique C11. Il en est de même du cercle C2 constituant le contour interne de la couronne et qui est projeté selon le cercle C21. En considérant à priori l'anneau lumineux C11—C21 de faible largeur, les zones d'intersection avec les barrettes détectrices selon les axes OX et OY sont assimilées à des zones ponctuelles en A (x1,O), B (x2,O), C (O,y1) et D (O,y2). Le centre commun O11 des cercles C11 et C21 se situe à l'intersection de l'axe S1 O1

avec le plan 3, cet axe correspondant à la direction $\Delta$ de la source S1 par rapport au dispositif de localisation. Les coordonnées xo et yo du centre O11 sont aisément déductibles des coordonnées des points d'intersection selon les relations algébriques suivantes:

$$xo = \frac{x1 + x2}{2}$$

et

$$yo = \frac{y1 + y2}{2}$$

permettant de définir le dépointage $\theta$ de la direction $\Delta$ par rapport à l'axe Z de référence. On notera en passant que dans le cas envisagé d'un cercle, trois quelconques des quatre points d'intersection suffisent théoriquement pour définir le cercle par le calcul.

Les figures 3 à 7 suivantes se rapportent à diverses formes de réalisation du cache et des détecteurs. La figure 3 représente en coupe une version où le cache optique est constitué par une lame transparente à faces parallèles 15. L'anneau circulaire 4 est délimité par un dépôt 16 extérieur à celui-ci, en un matériau opaque pour le rayonnement ambiant et celui de la source. Le dépôt 16 est obtenu selon des techniques connues, par exemple par photogravure. A l'endroit de la couronne transparente un autre dépôt 17 peut être produit avec un matériau constituant un filtre optique pour le rayonnement de la source; la bande spectrale utilisée peut par exemple se situer dans l'infrarouge. Le face de la lame sur laquelle sont formés les dépôts 16 et 17 est orientée vers l'intérieur du boîtier par mesure de protection. Des moyens de fixation 18, par collage par exemple, rendent la lame solidaire du boîtier, par se périphérie. Les dépôts sont de très faible épaisseur, de l'ordre de quelques microns; il en est autrement pour la lame à faces parallèles 15, notamment dans le cas d'une lame de verre pour satisfaire à une solidité mécanique suffisante. Dans la pratique, le décalage optique selon l'axe Z dû à la double réfraction par traversée de la lame, est négligeable sauf si la précision requise pour l'exploitation est très élevée et que la lame est épaisse et l'incidence $\theta$ des rayons élevée. Dans ces cas, des données de correction peuvent être introduites dans le calculateur annexe. Une solution préférée est de réduire l'épaisseur de la lame en utilisant un matériau plastique transparent à la place du verre. On peut aussi remplacer la lame par un ménisque de convergence nulle. Le ménisque est divergent et permet de corriger le déplacement d'image selon l'axe optique Z.

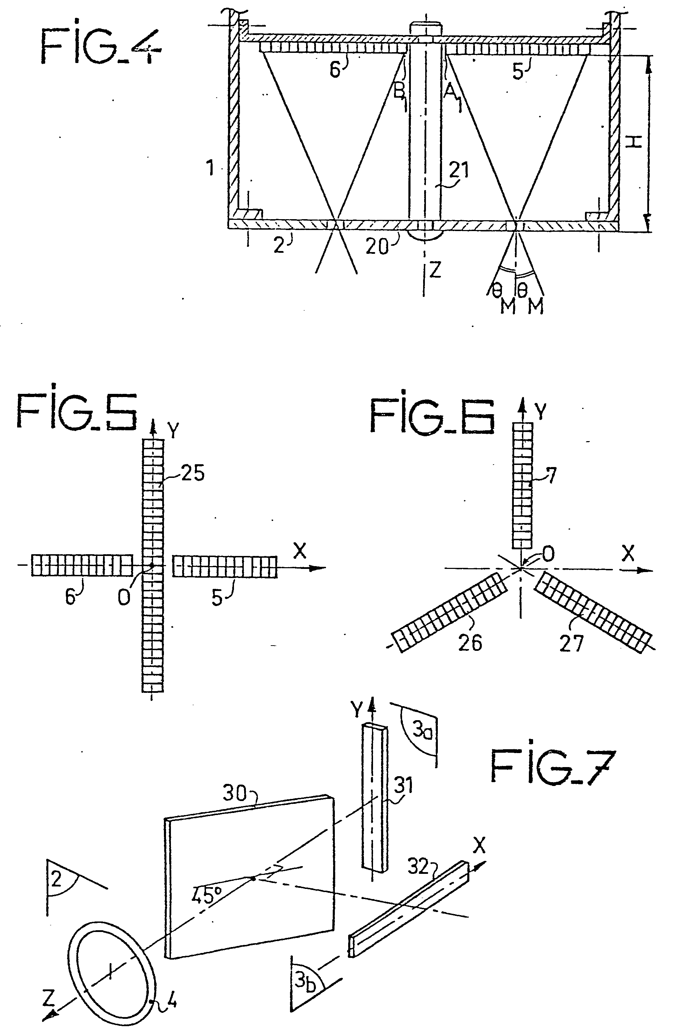

La figure 4 représente en coupe médiane une solution mécanique de cache optique obtenu par usinage de la couronne 4 sur la face 4. La pièce circulaire 20 ainsi libérée est maintenue en place par des moyens de fixation au boîtier déterminés en sorte de ne pas intercepter le rayonnement utilise dans le champ d'observation $\theta_m$ prévu. La fixation peut se faire à l'aide d'un axe mécanique 21. La distance H entre le plan du cache et celui de détection est déterminée en sorte que pour les valeurs angulaires maximales $\pm \theta_m$, les points extrêmes de détection A1 et B1 sont à distance du centre O (fig. 1) pour libérer une zone centrale où peut s'effectuer la fixation au boîtier par l'axe mécanique 21. Celui-ci peut d'ailleurs être renforcé par des nervures disposées par exemple dans les plans bissecteurs pour ne pas gêner la transmission optique et pour conférer à l'ensemble une rigidité renforcé et accroître la tenue aux vibrations.

Les figures 5 et 6 représentent, à titre non limitatif, deux autres formes de réalisation des détecteurs linéaires. Suivant une première forme trois barrettes sont utilisées, les barrettes verticales 7—8 étant remplacées par une barrette unique 25. Les circuits d'identification de rang 9 associés à un tel montage sont prévus pour déterminer notamment les deux points C et D de détection sur la barrette 25. Suivant la deuxième forme de réalisation, l'ensemble détecteur groupe trois barrettes identiques à 120° l'une de l'autre, le barrette 7 selon Y et les barrettes 26 et 27. Ce montage est de moindre intérêt qu'une disposition en X et en Y des détecteurs étant donné qu'il ne fournit que que trois points et ne permet donc pas de vérifications par redondance au niveau du calculateur; en outre, les formules de calcul sont plus complexes.

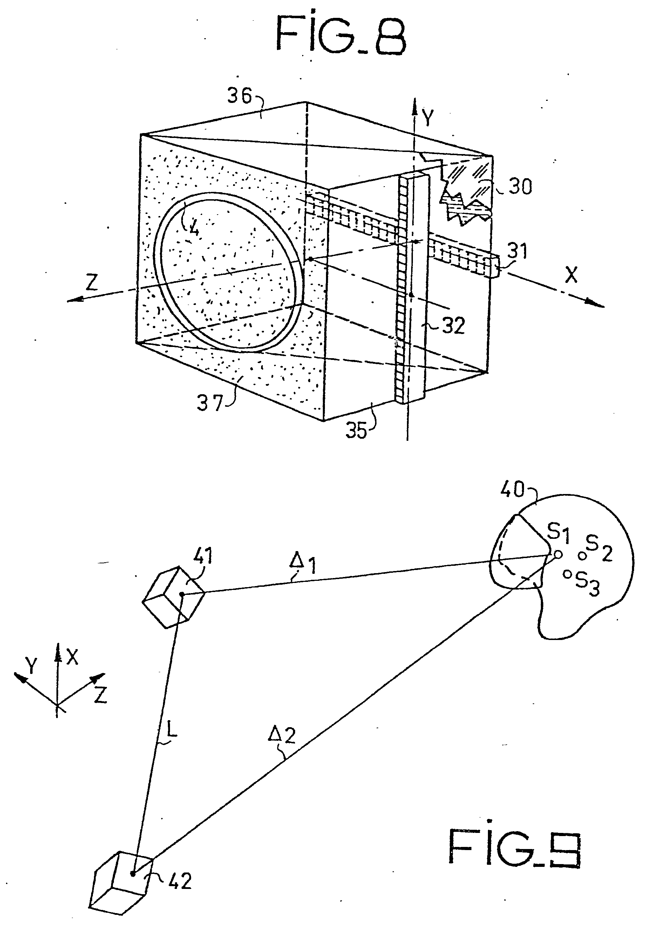

D'autres variantes de réalisation peuvent être en envisagées pour le cache optique et les détecteurs. Ainsi, la fente circulaire unique 4 peut être remplacée par plusieurs couronnes concentriques, ou être élargie jusqu'au centre O1 (fig. 1). Dans ce dernier cas, la transparence de cercle limité par C1 (fig. 2) peut être rendue variable radialement selon les techniques des atténuateurs optique à dégradé radial. Ces solutions présentent néanmoins l'inconvénient, entre autre, de compliquer le traitement des signaux détectés. En considérant une répartition homogène de l'éclairement, c'est-à-dire une source émettrice omnidirectionelle, la solution décrite avec une couronne transparente unique paraît préférable étant donné la simplicité de la réalisation, du traitement et du calcul. En ce qui concerne les détecteurs, il est difficile dans la pratique de réaliser un montage selon la figure 1 avec seulement deux barrettes orientées respectivement en X et en Y, par suite de leur situation dans deux plans juxtaposés avec superposition dans la zone centrale. Le montage avec deux barrettes détectrices est rendu possible selon une variante de réalisation préférée décrite ci-après à l'aide des figures 7 et 8.

Comme le montre le schéma de principe de la figure 7, un miroir semi-transparent 30 est interposé sur le trajet optique entre le plan due cache 2 et le plan de détection 3a pour former par réflexion un deuxième plan de détection 3b. La transmission du miroir est choisie égale à 0,5 pour égaliser l'énergie lumineuse divisée par le miroir et répartie vers les plans 3a et 3b. L'inclinaison du miroir sur l'axe Z est choisie de préférence égale à 45° en sorte que les plans 3a et 3b sont perpendiculaires, chaque plan peut contenir une seuele barrette. Une barrette 31 est dirgée selon par exemple la direction Y de reférence et la deuxième barrette 32 selon la deuxième direction, X en l'occurence, vue par réflexion sur le miroir.

La figure 8 représente une réalisation préférée du montage selon la figure 7, sous forme monobloc d'un cube groupant deux prismes 35 et 36 accolés par leurs grandes faces. L'une des grandes faces est traitée par un dépôt pour constituer le miroir plan semi-réfléchissant 30. Le traitement peut également comporter une couche formant filtre optique pour l'exploitation. La petite face 37 du prisme 35 est traitée pour former le cache optique comme décrit précédemment à l'aide de la figure 3. Le cube ainsi constitué et pourvu de deux barrettes 31 et 32 est monté dans un boîtier non figuré, la face 37 constituant la face avant réceptrice du rayonnement. Les prismes sont constitués en matériau transparent, verre ou plastique.

Les circuits de traitement 9 assurant l'identification de rang sont considérés réalisés selon des techniques connues en utilisant des circuits de lecture de CCD et en procédant par comptage.

On pourra se reporter notamment aux publications FR—A—2 399 033 et FR—A—2 416 480 dans lesquelles se trouvent décrits de tels circuits ainsi que l'application à un système de repérage de direction tel qu'un viseur de casque, et la duplication des dispositifs de localisation ou capteurs permettant par triangulation d'affiner la mesure. La variante de réalisation préférée dans le cadre d'un système de repérage de direction est celle où chaque groupement d'au moins trois diodes constituant des sources ponctuelles, est associé à deux capteurs. Un montage correspondant est schématisé à titre de rappel sur la figure 9. Les capteurs 41, 42 sont fixés à une structure symbolisée par le trièdre XYZ et les sources S1, S2, S3 sont fixées sur la structure mobile 40. La distance L entre les capteurs est connue ainsi que leurs positions. Les directions $\Delta 1$ et $\Delta 2$ sont obtenues par le calcul. La source S1 est à l'intersection des droites $\Delta 1$ et $\Delta 2$ du triangle L, $\Delta 1$, $\Delta 2$. La détermination spatiale peut être vérifiée par redonance en remarquant que l'une des directions, $\Delta 1$ par exemple, détermine avec l'abscisse XO du centre du cercle projeté (fig. 2) un premier plan parallèle à Y, et avec l'ordonnée YO un deuxième plan parallèle à X et que, l'intersection de la deuxième direction $\Delta 2$ avec chacun de ces plans correspond au point source S1.

Le dispositif de localisation décrit, combiné avec plusieurs sources pontuelles, permet ainsi de repérer continuellement une direction d'axe de la structure mobile 40 portant les sources. L'utilisation de plusieurs dispositifs de localisation, permet de repérer spatialement une source comme constituant le point commun des directions de dépointage $\Delta$ correspondantes identifiées par le calcul.

Parmi les avantages résultant d'un dispositif de localisation conforme à l'invention, outre sa simplicté d'exécution, il y a lieu de noter que le calcul complexe d'au moins deux plans et de leur intersection peut être remplacé par le détermination du centre d'un cercle au moyen de deux sommations.

## Revendications

1. Dispositif optoélectrique de localisation de source rayonnante comportant, un boîtier (1; 35, 36) avec une face avant (2; 37) formant un cache optique pour ne laisser pénétrer le rayonnement de la source que selon des zones transparentes (4) de forme déterminée et, dans un plan (3) parallèle au cache et interne du boîtier, un montage de réseaux linéaires d'éléments photosensibles (5, 6, 7, 8; 31, 32), des circuits de traitement des signaux détectés par les réseaux identifiant le rang des éléments sensibilisés par le rayonnement transmis à travers le cache, et des moyens de calcul (10) de localisation de la source à partir des identifications de rang, le dispositif étant caractérisé en ce que les zones transparentes (4) délimitent une forme circulaire (C1) en sorte que le rayonnement transmis est interne à un cône ayant pour sommet la source (S1) et s'appuyant sur cette forme circulaire, et en ce que les réseaux détecteurs sont déterminés en sorte d'interceptor au moins trois points du cercle projeté (C11) dans le plan (3) parallèle au cache et correspondant à la forme circulaire, les moyens le calcul déterminant à partir des coordonnées de ces trois points les coordonnées (XO, YO) du centre correspondant (O11) et la localisation angulaire ($\Delta$, $\theta$) de la source.

2. Dispositif selon la revendication 1, caractérisé en ce que les zones transparentes (4) délimitent au moins une couronne circulaire.

3. Dispositif selon la revendication 1 ou 2, caractérisé en ce qu'il comporte un miroir plan semi-réfléchissant (30) interposé sur le trajet optique entre le cache et le plan de détection, en sorte de réfléchir partiellement le rayonnement et répartir les réseaux détecteurs dans le plan de détection (3a) et dans un deuxième plan (3b) symétrique du précédent vu à travers le miroir.

4. Dispositif selon la revendication 3, caractérisé en ce qu'il comporte deux barrettes détectrices (31—32), une dans chaque plan de détection, disposées respectivement selon deux direction cartésiennes X et Y de référence.

5. Dispositif selon la revendication 3 ou 4, caractérisé en ce qu'il est réalisé au moyen d'un cube en matériau transparent formé de deux prismes (35—36) accolés par leurs grandes faces, l'une des grandes faces étant traitée pour former le miroir semi-réfléchissant (30) et une petite face (37) d'une prisme étant traitée pour former le cache optique.

6. Dispositif selon la revendication 1 ou 2, caractérisé en ce que les réseaux sont formés de quatre barrettes détectrices (5, 6, 7, 8) disposées deux par deux selon deux axes cartésiens de référence (X, Y) à égale distance du centre (O) de ces axes.

7. Dispositif selon la revendication 1 ou 2, caractérisé en ce que les réseaux sont formés de trois barrettes détectrices (5, 6, 25), l'une disposée selon une première direction de référence (Y) et les deux autres selon une deuxième direction de référence (X) orthogonale à la première.

8. Dispositif selon la revendication 1 ou 2, caractérisé en ce que les réseaux sont formés de trois barrettes détectrices (7, 26, 27) disposées à 120°C l'une de l'autre.

9. Dispositif selon l'une quelconque des revendications 1 à 8, caractérisé en ce qu'il comporte en outre des moyens de filtrage optique (17) du rayonnement de la source.

10. Dispositif selon l'une quelconque des revendications 1, 2, 6, 7, 8, caractérisé en ce que le cache optique est réalisé sous forme d'une lame à faces parallèles (15) en matériau transparent et d'un dépôt (16) en matériau opaque au rayonnement ambiant et à celui de la source, le dépôt étant effectué sur une des faces recouvrant la surface extérieure aux zones transparentes.

11. Dispositif selon les revendications 9 et 10 en combinaison, caractérisé en ce que la surface correspondant aux zones transparentes est recouverte d'un dépôt (17) formant filtre optique pour le rayonnement de la source.

12. Dispositif selon la revendication 2, ou selon l'une quelconque des revendications 6 à 8, caractérisé en ce que la couronne transparente est usinée sur la face avant (2) du boîtier et la partie centrale circulaire (20) est maintenue solidaire du boîtier par une fixation mécanique (21) extérieure au trajet optique parvenant sur les réseaux détecteurs.

13. Dispositif selon l'une quelconque des revendications 1, 2, 3, 6, 7, 8, caractérisé en ce que le cache optique est réalisé sous forme d'un ménisque de convergence nulle comportant, sur une face dioptrique, un dépôt en matière opaque au rayonnement ambiant et à celui de la source, recouvrant la surface extérieure aux zones transparentes du cache.

14. Système de repérage de direction, notamment viseur de casque, caractérisé en ce qu'il comporte au moins un dispositif de localisation selon l'une quelconque des revendications 1 à 13, associé à un groupement d'au moins trois diodes électroluminescentes disposées sur une structure mobile (40).

## Claims

1. An electro-optical device for localizing a radiation source, comprising a housing (1, 35, 36) having a front face (2, 37) which constitutes an optical mask adapted to allow the radiation of the source to penetrate only through transparent zones (4) having a selected shape and, in a plane (3) parallel to the mask and located within said housing, an assembly of linear grids of light-sensitive elements (5, 6, 7, 8, 31, 32), circuits for treating the signals detected by the grids, which identify the row of elements sensitized by the radiation transmitted through said mask, and computing means (10) for computing the localization of the source on the basis of the row identifications, said device being characterized in that the transparent zones (4) delimit a circular shape (C1), so that the transmitted radiation is confined within a cone the apex of which is the source (S1) and which is based on said circular shape, and in that detecting grids are arranged in such a manner that they intercept at least three points of the circle projected (C11) in the plane (3) parallel to the mask and corresponding to the circular shape, said computing means determining on the basis of the coordinates of said three points the coordinates (XO, YO) of the corresponding centre (O11) and the angular localization (Δ, O) of the source.

2. A device according to claim 1, characterized in that the transparent zones (4) delimit at least one angular area.

3. A device according to claim 1 or 2, characterized in that it comprises a planar semi-reflecting mirror (30) interposed in the optical path between the mask and the detection plane, so as to reflect partially the radiation and distribute the detecting grids in the detection plane (3a) and in a second plane (3b) symmetrically arranged with respect to the preceding one, as viewed through said mirror.

4. A device according to claim 1, characterized in that it comprises the detecting straps (31—32) disposed each one in a respective detection plane and in two respective cartesian reference directions X and Y.

5. A device according to claim 3 or 4, characterized in that it is constituted by a cube made of transparent material and formed by two prisms (35—36) juxtaposed by their large faces, one of said large faces being treated to constitute said semi-reflecting mirror (30), while a small face (37) of one prism is treated to constitute said optical mask.

6. A device according to claim 1 or 2, characterized in that said grids are constituted by four detecting straps (5, 6, 7, 8) arranged in pairs along two cartesian reference axes (X, Y) at equal distances from the centre (O) of said axes.

7. A device according to claim 1 or 2, characterized in that said grids are constituted by three detecting straps (5, 6, 25), one of which is arranged in a first reference direction (Y), while the two other straps are arranged in a second reference direction (X) orthogonal with respect to said first reference direction.

8. A device according to claim 1 or 2, characterized in that said grids are constituted by three detecting straps (7, 26, 27) disposed at an angular distance of 120° with respect to each other.

9. A device according to any one of claims 1 to 8, characterized in that it further comprises optical filtering means (17) for filtering the radiation of said source.

10. A device according to any one of claims 1, 2, 6, 7 and 8, characterized in that said optical mask is constituted by a blade having parallel faces (15) and made of a transparent material, and a layer (16) of material impervious to the ambient radiation as well as to the radiation of the source, said layer being deposited on one of the faces covering the surface outside of said transparent zones.

11. A device according to claims 9 and 10, taken in combination, characterized in that the surface corresponding to the transparent zones is covered with a deposit (17) constituting an optical filter for the radiation of the source.

12. A device according to claim 2, or according to any one of claims 6 to 8, characterized in that said transparent annular area is machined on the front face (2) of said housing, the central circular portion (20) being maintained in a position integral with the housing by mechanical fixing means (21) located outside of the optical path terminating at the detecting grids.

13. A device according to any one of claims 1, 2, 3, 6, 7 and 8, characterized in that the optical mask is constituted by a menisc having a convergence equal to zero and comprising, on a dioptric face a layer of material impervious to the ambient radiation and to the radiation of said source, which covers the surface outside of the transparent zones of the mask.

14. A direction determining system, especially a helmet sighting system, characterized in that it comprises at least one localizing device according to any one of claims 1 to 13, in combination with a group of at least three electroluminescent diodes disposed on a movable structure (40).

## Patentansprüche

1. Elektro-optische Einrichtung zum Orten einer Strahlungsquelle, umfassend ein Gehäuse (1; 35, 36) mit einer eine optische Maske bildenden Stirnwandung (2, 37), die die Strahlung der Quelle nur in transparenten Zonen (4) vorbestimmter Form durchtreten lässt, sowie eine in einer innerhalb des Gehäuses befindlichen, zur Maske parallelen Ebene (3) vorgesehene Anordnung von linearen, aus lichtempfindlichen Detektor-Elementen (5, 6, 7, 8; 31, 32) bestehenden Netzen, ferner Stromkreise zur Auswertung der von den Netzen empfangenen Signale, die die Reihe der durch die von der Maske durchgelassenen Strahlungen sensibilisierten Elemente identifizieren, sowie Ortungsrechenmittel (10) zum Orten der Quelle aufgrund der Reihenidentifizierung, dadurch gekennzeichnet, dass die transparenten Zonen (4) ein kreisförmiges Gebilde (C1) darstellen, wobei die übertragene Strahlung innerhalb eines Kegels liegt, dessen Spitze die Quelle (S1) ist und der auf dem kreisförmigen Gebilde ruht, und dass die Detektornetze derart ausgebildet sind, dass sie wenigstens drei Punkte des auf die zur Maske parallele Ebene (3) projizierten, dem kreisförmigen Gebilde entsprechenden Kreises (C11) auffangen, wobei die Rechenmittel aufgrund der Koordinaten dieser drei Punkte die Koordinaten (XO, YO) des entsprechenden Zentrum (O11) und die Winkellage (Δ, O) der Quelle bestimmen.

2. Einrichtung nach Anspruch 1, dadurch gekennzeichnet, dass die transparenten Zonen (4) wenigstens einen kreisförmigen Kranz bilden.

3. Einrichtung nach Anspruch 1 oder 2, dadurch gekennzeichnet, dass sie einen ebenen halbdurchsichtigen Spiegel (30) aufweist, der auf dem optischen Strahlengang zwischen der Maske und der Detektionsebene angeordnet ist, so dass die Strahlung teilweise reflektiert wird und die Detektionsnetze auf die Detektionsebene (3a) und auf eine zweite, zu der durch den Spiegel gesehenen vorgenannten Ebene symmetrische Ebene (3b) verteilt werden.

4. Einrichtung nach Anspruch 3, dadurch gekennzeichnet, dass sie zwei Detektorstäbe (31—32) aufweist, die in je einer Detektionsrichtung und in je einer von zwei kartesischen Bezugsrichtungen X und Y angeordnet sind.

5. Einrichtung nach Anspruch 3 oder 4, dadurch gekennzeichnet, dass sie aus einem Würfel aus transparentem Material besteht, der durch zwei an ihren grossen Flächen miteinander verbundene Prismen (35—36) gebildet ist, wobei eine dieser grossen Flächen geeignet behandelt ist, um den halbdurchsichtigen Spiegel (30) zu bilden, während eine kleine Fläche eines der Prismen behandelt ist, um die optische Maske zu bilden.

6. Einrichtung nach Anspruch 1 oder 2, dadurch gekennzeichnet, dass die Netze durch vier Detektorstäbe (5, 6, 7, 8) gebildet sind, die paarweise entsprechend zweier kartesischer Bezugsachsen (X, Y) mit gleichem Abstand vom Zentrum (10) dieser Achsen angeordnet sind.

7. Einrichtung nach Anspruch 1 oder 2, dadurch gekennzeichnet, dass die Netze aus drei Detektorstäben (5, 6, 25) bestehen, deren erster entsprechend einer ersten Bezugsrichtung (Y) angeordnet ist, während die beiden anderen Stäbe entsprechend einer zweiten, in bezug auf die erste Bezugsrichtung orthogonalen Bezugsrichtung (X) angeordnet ist.

8. Einrichtung nach Anspruch 1 oder 2, dadurch gekennzeichnet, dass die Netze durch drei um je 120° gegeneinander versetzte Detektionsstäbe gebildet sind.

9. Einrichtung nach einem der Ansprüche 1 bis 8, dadurch gekennzeichnet, dass sie ferner optische Filtermittel (17) zum Filtern der Strahlung der Quelle aufweist.

10. Einrichtung nach einem der Ansprüche 1, 2, 6, 7 und 8, dadurch gekennzeichnet, dass die optische Maske durch eine parallelflächige Lamelle (15) aus transparentem Material, und einen für die Umgebungsstrahlung und die Strahlung der Quelle undurchlässigen, auf einer die ausserhalb der durchlässigen Zonen liegende Oberfläche abdeckdenden Fläche aufgebrachten Überzug gebildet ist.

11. Einrichtung nach den kombinierten Ansprüchen 9 und 10, dadurch gekennzeichnet, dass die den transparenten Zonen entsprechende Oberfläche mit einem ein optisches Filter für die Strahlung der Quelle bildenden Überzug (17) versehen ist.

12. Einrichtung nach Anspruch 2, oder nach einem der Ansprüche 6 bis 8, dadurch gekennzeichnet, dass der transparente Kranz an der Vorderfläche (2) des Gehäuses ausgebildet ist, wobei der mittlere kreisförmige Teil (20) mit dem Gehäuse fest verbunden ist vermittels mechanischer Befestigungsmittel (21), die ausserhalb des die Dektektionsnetze erreichenden optischen Strahlengangs angeordnet sind.

13. Einrichtung nach einem der Ansprüche 1, 2, 3, 6, 7 und 8, dadurch gekennzeichnet, dass die optische Maske durch einen Meniskus mit Null-Konvergenz gebildet ist, der auf einer dioptrischen Oberfläche einen für die Umgebungsstrahlung und für die Quellenstrahlung undurchlässigen Überzug trägt, welcher die ausserhalb der durchlässigen Zonen der Maske liegende Oberfläche bedeckt.

14. Richtungsauffindungssystem, insbesondere Helmvisiergerät, dadurch gekennzeichnet, dass es wenigstens eine Ortungseinrichtung nach einem der Ansprüche 1 bis 13 in Verbindung mit einer Anordnung von wenigstens drei auf einer beweglichen Struktur (40) angebrachten Elektrolumineszenz-Dioden aufweist.

# FIG_1

# FIG_2

# FIG_3

FIG_4

6    B    A    5

1

21

2    20    Z    θ θ
             M M

H

FIG.5    Y

25

6    0    5
X

FIG_6    Y

7

0    X

26    27

Y    3a

30    31

FIG_7

2

45°

X

32

Z    4    3b

2

# FIG_8

# FIG_9